# EUROPEAN PATENT SPECIFICATION

(11) **EP 1 680 293 B1**
(45) Date of publication and mention of the grant of the patent: **18.04.2007**
(21) Application number: 04765677.2
(22) Date of filing: 29.09.2004
(51) Int. Cl.: B60H 1/34, B60H 1/24, B60J 10/04, B60S 1/54

(54) **VENTILATION DEVICE FOR A MOTOR VEHICLE WINDOW PANE**
VENTILATIONSVORRICHTUNG FÜR EINE KRAFTFAHRZEUG-FENSTERSCHEIBE
DISPOSITIF DE VENTILATION POUR VITRE DE VEHICULE AUTOMOBILE

(30) Priority: 30.09.2003 IT TO20030758
(43) Date of publication of application: 19.07.2006
(73) Proprietor: Metzeler Automotive Profile Systems Italy S.p.A., 10073 Cirié (Torino) (IT)
(72) Inventor: MINA, Luciano, I-10090 Castagneto Po (Torino) (IT); ZACCARIA, Manrico, I-10073 Cirie' (Torino) (IT)
(74) Representative: Quinterno, Giuseppe
(86) International application number: PCT/EP2004/010873
(87) International publication number: WO 2005/039904

(56) References cited:
- EP-A- 0 992 410
- DE-A- 3 017 974
- US-A- 2 677 155
- US-A- 6 135 874

## Description

The present invention relates to a ventilation device usable for demisting or defrosting a glass window pane of a motor vehicle. Such a device is disclosed in DE 3017974.

More specifically, the invention relates to a ventilation device for the inside of the glass pane of a window of a door or side of a motor vehicle in which, immediately below the window, the door or side is provided with an internal trim panel, the ventilation device comprising
the internal trim panel;
a substantially tubular air channel which extends along the glass pane in proximity to the lower edge of the window, and which is provided with an air outflow aperture facing the glass pane;
said aperture having a lower edge coupled in a sealed manner to the glass pane, and an upper edge coupled to the glass pane in such a way as to allow air to flow from the air channel towards the glass pane.

The invention aims to provide an improved ventilation device of the type defined above.

This and other aims are achieved according to the invention with a ventilation device having the characteristics defined in claim 1.

Further characteristics and advantages of the present invention will become clear from the following detailed description, provided with reference to the appended drawings, in which:
Figure 1 is a side view of a motor vehicle;
Figure 2 is a sectional view, substantially along the line II-II in Figure 1; and
Figures 3 and 4 are partial perspective views which show two different embodiments of an internal trim panel incorporating a ventilation device according to the present invention.

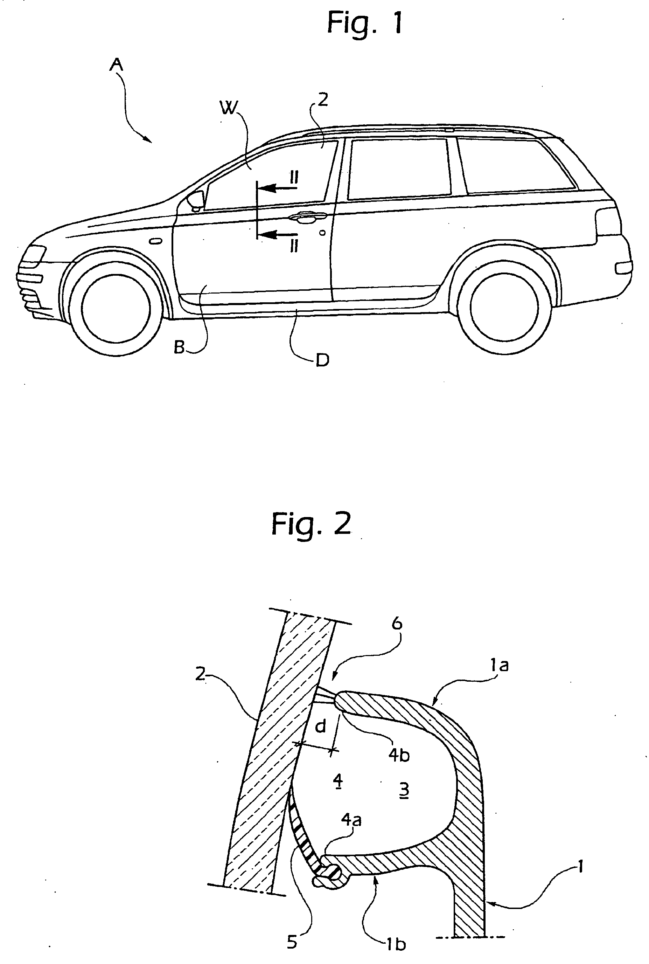

Figure 1 shows a motor vehicle indicated as a whole by A. In the non-limiting example shown in Figure 1, the motor vehicle A is a motor car provided with two side doors D, only one of which is visible.

Each side door D comprises a lower side portion B and an upper window W.

In a manner known per se, the lower portion B of each side door D is provided on the inside with an internal trim panel, indicated by 1 in Figure 2. The trim panel is made, for example, of a rigid plastics material.

Each window W, in a manner known per se, comprises a glass pane indicated by 2 in Figures 1 and 2.

In the present description, the term "glass pane" means in general a pane of transparent material, not necessarily consisting of glass, but which could for example be made of a transparent plastics material.

As shown in Figure 2, the upper end portion of the internal trim panel 1 has a cross-section substantially in the form of a Y-shape bent back towards the glass pane 2, with an upper limb 1a and a lower limb 1b between which an air channel 3 is defined. The air channel 3 is substantially tubular in shape and extends along the glass pane 2 in proximity to the lower edge of the window W. The air channel is provided for an air outflow aperture 4 facing the glass pane 2. The aperture 4 has a lower edge 4a and an upper edge 4b.

The lower edge 4a of the air outflow aperture 4 is coupled in a sealed manner to the glass pane 2. In the embodiment shown in Figure 2, the lower limb 1b of the upper end portion of the trim panel is provided with a sealing lip 5, which extends from the aforesaid lower edge 4a and which presses resiliently against the glass pane 2.

The sealing lip 5 may be made of an elastomeric material, possibly flocked on the surface.

The upper edge 4b of the air outflow aperture 4 of the channel 3 is coupled to the glass pane 2 in such a way as to allow air to flow from the channel 3 towards the glass pane 2.

In the embodiment shown in Figure 2, the edge of the upper limb 1a of the internal trim panel 1 extends at a predetermined distance d from the glass pane 2.

As shown in Figure 2, said upper edge 4b may conveniently be provided (in a manner known per se) with a plurality of flocked bristles 6 which form a sort of brush-like barrier, permeable to air, which presses against the inner surface of the glass pane 2.

The air channel 3 is intended to be connected in a manner known per se to the heating/air-conditioning system of the motor vehicle A, in such a way as to selectively receive therefrom a warm or cold flow of air. Part of the air flow leaves the air channel 3 and flows along the inner side of the glass pane 2. This makes it possible to produce a demisting or defrosting effect.

Said air flow may also serve to increase the comfort of the occupants of the passenger compartment.

In an alternative embodiment, not shown in the drawings, the edge of the upper limb 1a of the end portion of the trim panel 1 has a lip composed of a strip of fabric which extends towards and against the glass pane 2, forming an air-permeable barrier between the air channel 3 and the inside of the glass pane.

As a further alternative, in another embodiment of the present invention the edge portion of the upper limb 1a of the internal trim panel 1 is provided with an arrangement of longitudinally spaced notches, between adjacent pairs of which are defined corresponding edge portions projecting in the direction of the glass pane.

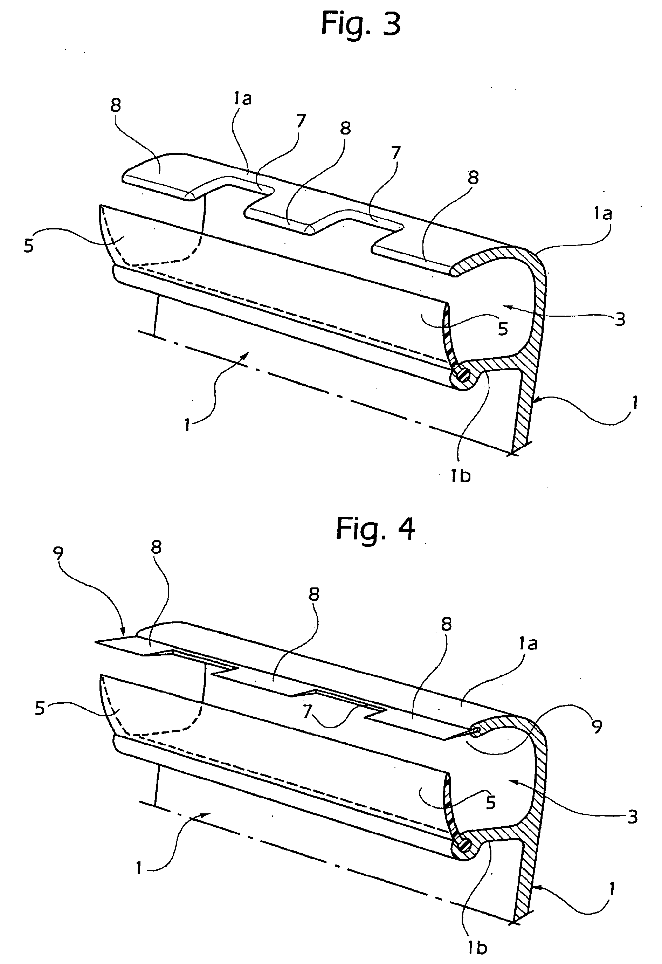

A first and a second embodiment of this concept are shown respectively in Figures 3 and 4.

In the embodiment shown in Figure 3, the aforesaid notches, indicated by 7, are produced directly in the edge of the upper limb 1a of the internal trim panel 1, and between them define protruding edge portions 8 which are integral with the trim panel 1.

In the embodiment shown in Figure 4, the aforesaid notches 7 and the protruding edge portions 8 are formed in a resilient lip member 9 provided at the end of the upper limb la of the trim panel 1.

The air channel 3 may have a cross-section that is substantially constant over its length or a cross-section which increases with the distance from its end close to the fascia.

With the principle of the invention remaining unchanged, the embodiments and details of production may of course be widely varied with respect to what has been described and illustrated purely by way of non-limiting example, without thereby departing from the scope of the invention as defined in the appended claims.

## Claims

1. A ventilation device for the inside of the glass pane (2) of a window (W) of a door or side (D) of a motor vehicle, wherein, immediately below the window (W), the door or side (D) is provided with an internal trim panel (1), the ventilation device comprising
the internal trim panel;
a substantially tubular air channel (3) which extends along the glass pane (2) in proximity to the lower edge of the window (W), and which is provided with an air outflow aperture (4) facing the glass pane (2);
said aperture (4) having a lower edge (4a) coupled in sealed manner to the glass pane (2), and an upper edge (4b) coupled to the glass pane (2) in such a way as to allow air to flow from the channel (3) towards the glass pane (2);
the ventilation device being **characterised in that** said air channel (3) is formed integrally in the upper end portion of said internal trim panel (1).

2. A ventilation device according to claim 1, wherein said upper end portion of the internal trim panel (1) has a cross-section substantially in the form of a Y-shape curved towards the glass pane (2), having an upper limb (1a) and a lower limb (1b) between which said air channel (3) is defined.

3. A ventilation device according to claim 2, wherein the lower limb (1b) of said end portion of the internal trim panel (1) is provided with a sealing lip (5) which presses resiliently against the glass pane (2).

4. A ventilation device according to claim 2, wherein the edge portion of the limb (1a) of said end portion of the internal trim panel (1) extends at a distance (d) from the glass pane (2).

5. A ventilation device according to claim 4, wherein the edge portion of the upper limb (1a) of said end portion of the internal trim panel (1) is provided with a distribution of flocked bristles (6) which are directed towards the glass pane (2) and which form an air-permeable barrier between said air channel (3) and the inside of the glass pane (2).

6. A ventilation device according to claim 2, wherein the edge portion of the upper limb (1a) of said end portion of the internal trim panel (1) has a lip formed by a strip of fabric which extends towards and against the glass pane (2) and which forms an air-permeable barrier between said air channel (3) and the inside of the glass pane (2).

7. A ventilation device according to claim 2, wherein the edge portion of the upper limb (1a) of said end portion of the internal trim panel (1) is provided with an arrangement of longitudinally spaced notches (7), between adjacent pairs of which are defined corresponding edge portions (8) projecting in the direction of the glass pane (2) so that said notches (7) define outflow apertures towards the glass pane for the air which flows, in operation, in said air channel (3).

8. A ventilation device according to claim 7, wherein said notches (7) are produced directly in the edge (1a) of the trim panel (1).

9. A ventilation device according to claim 7, wherein said notches (7) are produced in a resilient lip member (9) connected to the edge (1a) of the internal trim panel (1).

10. A ventilation device according to any one of the preceding claims, wherein the air channel (3) has a cross-section that is substantially constant over its length.

11. A ventilation device according to any one of claims 1-9, wherein the air channel (3) has a cross-section increasing with the distance from its end closest to the fascia.

## Patentansprüche

1. Ventilationsvorrichtung für die Innenseite der Glasscheibe (2) eines Fensters (W) einer Tür oder Seite (D) eines Kraftfahrzeugs, wobei die Tür oder Seite (D) unmittelbar unter dem Fenster (W) mit einer Innenverkleidung (1) versehen ist und die Ventilationsvorrichtung Folgendes umfasst:
die Innenverkleidung;
einen im Wesentlichen röhrenförmigen Luftkanal (3), der sich entlang der Glasscheibe (2) nahe dem unteren Rand des Fensters (W) erstreckt und mit einem der Glasscheibe (2) zugewandten Luftaustrittsschlitz (4) versehen ist;
wobei der Schlitz (4) einen in abgedichteter Art und Weise mit der Glasscheibe (2) verbundenen unteren Rand (4a) und einen oberen Rand (4b) aufweist, der solcherart mit der Glasscheibe (2) verbunden ist, um Luft vom Kanal (3) zur Glasscheibe (2) strömen zu lassen;
wobei die Ventilationsvorrichtung **dadurch gekennzeichnet ist, dass** der Luftkanal (3) im oberen Endabschnitt der Innenverkleidung (1) integriert ist.

2. Ventilationsvorrichtung gemäß Anspruch 1, wobei der obere Endabschnitt der Innenverkleidung (1) einen Querschnitt im Wesentlichen in Form eines zur Glasscheibe (2) hin gebogenen Y besitzt, das ein oberes Glied (1a) und ein unteres Glied (1b) aufweist, zwischen denen der Luftkanal (3) definiert ist.

3. Ventilationsvorrichtung gemäß Anspruch 2, wobei das untere Glied (1b) des Endabschnitts der Innenverkleidung (1) mit einer Dichtungslippe (5) versehen ist, die elastisch gegen die Glasscheibe (2) drückt.

4. Ventilationsvorrichtung gemäß Anspruch 2, wobei sich der Randteil des Glieds (1a) des Endabschnitts der Innenverkleidung (1) in einem Abstand (d) von der Glasscheibe (2) erstreckt.

5. Ventilationsvornchtung gemäß Anspruch 4, wobei der Randteil des oberen Glieds (1a) des Endabschnitts der Innenverkleidung (1) mit einer Anordnung von beflockten Borsten (6) versehen ist, die zur Glasscheibe (2) gerichtet sind und eine luftdurchlässige Barriere zwischen dem Luftkanal (3) und der Innenseite der Glasscheibe (2) bilden.

6. Ventilationsvorrichtung gemäß Anspruch 2, wobei der Randteil des oberen Glieds (1a) des Endabschnitts der Innenverkleidung (1) eine von einem Stoffstreifen gebildete Lippe aufweist, die sich zur und gegen die Glasscheibe (2) erstreckt und eine luftdurchlässige Barriere zwischen dem Luftkanal (3) und der Innenseite der Glasscheibe (2) bildet.

7. Ventilationsvorrichtung gemäß Anspruch 2, wobei der Randteil des oberen Glieds (1a) des Endabschnitts der Innenverkleidung (1) mit einer Anordnung von der Länge nach mit Zwischenraum angeordneten Kerben (7) versehen ist, wobei zwischen benachbarten Paaren davon entsprechende Randabschnitte (8) definiert sind, die in Richtung der Glasscheibe (2) ragen, so dass die Kerben (7) Austrittsöffnungen für die Luft, die während des Betriebs im Luftkanal (3) strömt, hin zur Glasscheibe definieren.

8. Ventilationsvorrichtung gemäß Anspruch 7, wobei die Kerben (7) direkt im Rand (1a) der Verkleidung (1) angefertigt sind.

9. Ventilationsvorrichtung gemäß Anspruch 7, wobei die Kerben (7) in einem mit dem Rand (1a) der Innenverkleidung (1) verbundenen elastischen Lippenteil (9) angefertigt sind.

10. Ventilationsvorrichtung gemäß einem der vorhergehenden Ansprüche, wobei der Luftkanal (3) einen Querschnitt aufweist, der über seine Länge hinweg im Wesentlichen konstant ist.

11. Ventilationsvorrichtung gemäß einem der Ansprüche 1-9, wobei der Luftkanal (3) einen Querschnitt aufweist, der mit dem Abstand von seinem Ende, das dem Instrumentenbrett am nächsten liegt, zunimmt.

## Revendications

1. Dispositif de ventilation destiné à l'intérieur de la vitre (2) d'une fenêtre (W) d'une porte ou d'un côté (D) d'un véhicule automobile, dans lequel, immédiatement sous la fenêtre (W), la porte ou le côté (D) est doté(e) d'un panneau de garniture interne (1), le dispositif de ventilation comprenant :
le panneau de garniture interne ;
un canal d'air sensiblement tubulaire (3) qui s'étend le long de la vitre (2) à proximité du bord inférieur de la fenêtre (W), et qui est doté d'une ouverture de sortie d'air (4) faisant face à la vitre (2) ;
ladite ouverture (4) comportant un bord inférieur (4a) couplé de façon étanche à la vitre (2), et un bord supérieur (4b) couplé à la vitre (2) de façon à permettre à l'air de s'écouler du canal (3) vers la vitre (2);
le dispositif de ventilation étant **caractérisé en ce que** ledit canal d'air (3) est formé d'un seul tenant dans la partie d'extrémité supérieure dudit panneau de garniture interne (1).

2. Dispositif de ventilation selon la revendication 1, dans lequel ladite partie d'extrémité supérieure du panneau de garniture interne (1) comporte une section transversale sensiblement sous la forme d'un Y incurvé vers la vitre (2), comportant une branche supérieure (1a) et une branche inférieure (1b) entre lesquelles ledit canal d'air (3) est défini.

3. Dispositif de ventilation selon la revendication 2, dans lequel la branche inférieure (1b) de ladite partie d'extrémité du panneau de garniture interne (1) est dotée d'une lèvre d'étanchéité (5) qui exerce une pression de façon élastique contre la vitre (2).

4. Dispositif de ventilation selon la revendication 2, dans lequel la partie de bord de la branche (1a) de ladite partie d'extrémité du panneau de garniture interne (1) s'étend à une distance (d) de la vitre (2).

5. Dispositif de ventilation selon la revendication 4, dans lequel la partie de bord de la branche supérieure (1a) de ladite partie d'extrémité du panneau de garniture interne (1) est dotée d'une répartition de poils floqués (6) qui sont orientés sur la vitre (2) et qui forment une barrière perméable à l'air entre ledit canal d'air (3) et l'intérieur de la vitre (2).

6. Dispositif de ventilation selon la revendication 2, dans lequel la partie de bord de la branche supérieure (1a) de ladite partie d'extrémité du panneau de garniture interne (1) comporte une lèvre formée par une bande de tissu qui s'étend vers et contre la vitre (2) et qui forme une barrière perméable à l'air entre ledit canal d'air (3) et l'intérieur de la vitre (2).

7. Dispositif de ventilation selon la revendication 2, dans lequel la partie de bord de la branche supérieure (1a) de ladite partie d'extrémité du panneau de garniture interne (1) est dotée d'un agencement d'encoches espacées longitudinalement (7), entre les paires adjacentes desquelles sont définies les parties de bord correspondantes (8) faisant saillie dans la direction de la vitre (2) de sorte que lesdites encoches (7) définissent des ouvertures de sortie vers la vitre pour l'air qui s'écoule, en service, dans ledit canal d'air (3).

8. Dispositif de ventilation selon la revendication 7, dans lequel lesdites encoches (7) sont produites directement dans le bord (1a) du panneau de garniture (1).

9. Dispositif de ventilation selon la revendication 7, dans lequel lesdites encoches (7) sont produites dans un élément de lèvre élastique (9) connecté au bord (1a) du panneau de garniture interne (1).

10. Dispositif de ventilation selon l'une quelconque des revendications précédentes, dans lequel le canal d'air (3) comporte une section transversale qui est sensiblement constante sur sa longueur.

11. Dispositif de ventilation selon l'une quelconque des revendications 1 à 9, dans lequel le canal d'air (3) comporte une section transversale augmentant avec la distance à partir de son extrémité la plus proche de la planche de bord.
